# EUROPÄISCHE PATENTSCHRIFT

(11) **EP 0 921 034 B1**
(45) Veröffentlichungstag und Bekanntmachung des Hinweises auf die Patenterteilung: **23.06.2004**
(21) Anmeldenummer: 98121815.9
(22) Anmeldetag: 17.11.1998
(51) Int. Cl.: B60Q 1/00, B60Q 1/26

(54) **Leuchte oder Scheinwerfer**
Lights or headlamps
Feux ou phares

(30) Priorität: 06.12.1997 DE 19754229
(43) Veröffentlichungstag der Anmeldung: 09.06.1999
(73) Patentinhaber: Volkswagen Aktiengesellschaft, 38436 Wolfsburg (DE)
(72) Erfinder: Müller, Michael, 38518 Gifhorn (DE)
(74) Vertreter: Rabe, Andreas

(56) Entgegenhaltungen:
- EP-A- 0 908 666
- DE-A- 4 224 061
- DE-U- 29 604 910
- US-A- 4 835 666
- US-A- 5 692 824

## Beschreibung

Die Erfindung betritt eine Leuchte oder einen Scheinwerfer, insbesondere für ein Kraftfahrzeug mit einem Gehäuse mit einer Lichtaustrittsöffnung, welche mit einer Lichtscheibe abgedeckt ist.

Leuchten oder Scheinwerfer an Kraftfahrzeugen haben die Aufgabe, Signale anderen Verkehrsteilnehmern, wie z. B. Fahrtrichtungsänderung oder Bremsbetätigung anzuzeigen oder Umgebungsbereiche des Fahrzeuges auszuleuchten, z. B. Rückfahrscheinwerfer oder Frontscheinwerfer. Dabei müssen vom Gesetzgeber vorgegebene Mindestanforderungen an die Lichtintensität bzw. Lichtverteilung eingehalten werden. So sind in einer Leuchte in der Regel mehrere Signalfunktionen angeordnet, wie z. B. Blinklicht, Bremslicht oder Rückfahrscheinwerfer, wobei die Leuchte dann in mehrere Kammern unterteilt wird und jede Kammer mit einer farblich unterschiedlichen Lichtscheibe abgedeckt ist. Ferner weisen die Lichtscheiben optische Lichtablenkmittel auf mittels derer eine vorgegebene Lichtverteilung realisiert werden kann. Für einen Betrachter der Leuchte ergibt sich hiermit ein Erscheinungsbild der Leuchte, welches durch die Funktionen stark vorgeprägt ist.

Aus der DE 42 24 061 A1 ist eine Fahrradrückleuchte bekannt. Die Rückleuchte weist eine Glühlampe mit einem Reflektor auf sowie eine Leuchtdiode, deren Licht über einen Lichtgürtel emittiert wird. Der Lichtgürtel umfasst verschiedene optische Elemente, wie einen Streugürtel, eine Sammellinse und einen Durchlassbereich, bei dem das Licht der Leuchtdiode ohne Brechung durchgelassen wird.

DE 4 224 061 A1 offenbart die Merkmale des Oberbegriffs von Anspruch 1.

Ferner sind aus der EP 0 908 666 A2, der US 5,692,824 und der US 4,835,666 Fahrzeugleuchten mit einer ersten Lichtquelle und einer Zusatzlichtquelle bekannt. Die Zusatzlichtquellen sind jedoch von außen sichtbar, wodurch das Erscheinungsbild der Leuchten inhomogen wird.

Aufgabe der Erfindung ist es, eine Leuchte der eingangs genannten Art derart zu verbessern, daß sich für einen Betrachter der Leuchte ein möglichst homogener und klar aufgebauter Gesamteindruck ergibt. Ferner soll eine Möglichkeit geschaffen werden den gestalterischen Freiraum für den Aufbau der Leuchte zu vergrößern, und damit eine Leuchte entsprechend modernen Designanforderungen gestalten zu können.

Die Aufgabe wird erfindungsgemäß durch die Merkmale des Anspruchs 1 gelöst.

Es wird vorgeschlagen, daß das Gehäuse der Leuchte zumindestens einen teiltransparenten Abschnitt aufweist und auf der der Lichtaustrittsseite abgewandten Seite hinter dem teiltransparenten Abschnitt des Gehäuses zusätzlich wenigstens eine Lichtquelle vorgesehen ist.

Für einen Betrachter der Leuchte sind von außen sind nur die zwischen Gehäuse und Lichtscheibe angeordneten Lichtquellen zu erkennen. Die zusätzlichen Lichtquellen angeordnet hinter den teiltransparenten Abschnitten sind gar nicht von außen erkennbar.

Die teiltransparenten Abschnitte können vorteilhafterweise Lichtablenkoptiken oder eine Farbgebung aufweisen, mittels derer das von der zusätzlichen Lichtquelle abgestrahlte Licht durch substraktive Farbmischung in eine vorgegebene Farbgebung einfärbbar ist bzw. in eine vorgegebene Richtung ablenkbar ist.

Von besonderem Vorteil ist die Verwendung von LED's für die Lichtquellen bzw. die zusätzlichen Lichtquellen. Mit LED's kann das Licht bereits in der gewünschten Farbe abgestrahlt werden, bzw. aufgrund ihrer Eigenschaft besonders gerichtetes Licht abzugeben, auch in eine vorgegebene Richtung abgegeben werden.

Ein weiterer Vorteil von LED's besteht darin, daß LED's bereits in Abstrahlrichtung eine derart hohe Lichtintensität aufweisen, daß zusätzliche Reflektoren nicht erforderlich sind.

Das Gehäuse weist vorteilhafterweise einen als Reflektor ausgebildeten Bereich auf, in dem die Lichtquelle angeordnet ist und der derart ausgebildet ist, daß von der Lichtquelle abgegebenes Licht derart reflektierbar ist, daß eine vorgegebene Lichtverteilung erreichbar ist. Derartige Reflektoren werden auch als Freiflächenreflektoren bezeichnet und ermöglichen die Verwendung einer klaren Lichtscheibe.

Durch die Verwendung von Lichtablenkoptiken in den teiltransparenten Abschnitten bzw. die Verwendung von LED's als zusätzliche Lichtquellen in der bereits gewünschten Farbgebung wird es ermöglicht, die klare Lichtscheibe über die gesamte Leuchte vorzusehen.

Eine einfache Möglichkeit der Ausbildung der teiltransparenten Abschnitte besteht darin, das Gehäuse im Bereich der teiltransparenten Abschnitte mit einer metallischen Beschichtung zu versehen. Die Lichtdurchlässigkeit der metallischen Beschichtung kann durch die Wahl der Dicke der Beschichtung oder auch durch einen netzartigen Aufbau erreicht werden. Weiterhin kann eine derartige Folie unter Verwendung von wässrigen Farbsystemen an vorgegebenen Stellen lichtdurchlässig ausgebildet werden. In dem deutschen Gebrauchsmuster DE-GM 296 04 910 U1 wird beispielhaft beschrieben, wie eine derartige teiltransparente metallisch beschichtete Kunststoffolie oder beschichtete Metallfolie mit einem Kunststoff hinterspritzt wird, so daß sich eine einseitig lichtdurchlässige Lichtscheibe ergibt. Derartige metallische Beschichtungen haben die Eigenschaft, daß sie das Licht nur einseitig durchlassen Die metallisch beschichtete Kunststoffolie oder kunststoffbeschichtete Metallfolie kann dann beim Spritzvorgang des Gehäuses in das Werkzeug eingelegt werden und wird mit einem lichtdurchlässigen Kunststoff hinterspritzt. Das Gehäuse reflektiert dann von der einen Seite auftreffendes Licht während Licht von der anderen Seite durchgelassen wird.

Dadurch ergibt sich die Möglichkeit, daß die zusätzlichen Lichtquellen von dem Betrachter aus gesehen hinter dem Gehäuse angeordnet werden können, und somit nur die Lichtquellen zwischen Gehäuse und Lichtscheibe von außen erkennbar sind. Dadurch ergibt sich eine Möglichkeit eine Leuchte möglichst einfach für einen Betrachter von außen auszubilden.

Weiterhin ergibt sich eine Möglichkeit, beliebig viele Lichtquellen in unterschiedlicher Farbe hinter dem Gehäuse anzuordnen und somit Leuchten entsprechend modernen Designanforderungen auszubilden, ohne das diese das Erscheinungsbild der Leuchte beeinflussen.

Weiterhin ergibt sich dadurch die Möglichkeit, die gesamte Leuchte mit einer klaren Lichtscheibe abzudecken und dennoch die farbigen Signalleuchten in der Leuchte anzuordnen. Es entfällt auch die Unterteilung der Leuchte in mehrere Kammern, so daß ein sehr einfacher und kostengünstiger Aufbau des Gehäuses geschaffen wird.

Nachfolgend wird die Erfindung anhand eines Ausführungsbeispiels näher erläutert. Die Zeichnungen zeigen:
- Fig. 1: Ausschnitt eines Kraftfahrzeuges mit daran angeordneter Leuchte
- Fig. 2: Schnitt A-A durch die Leuchte

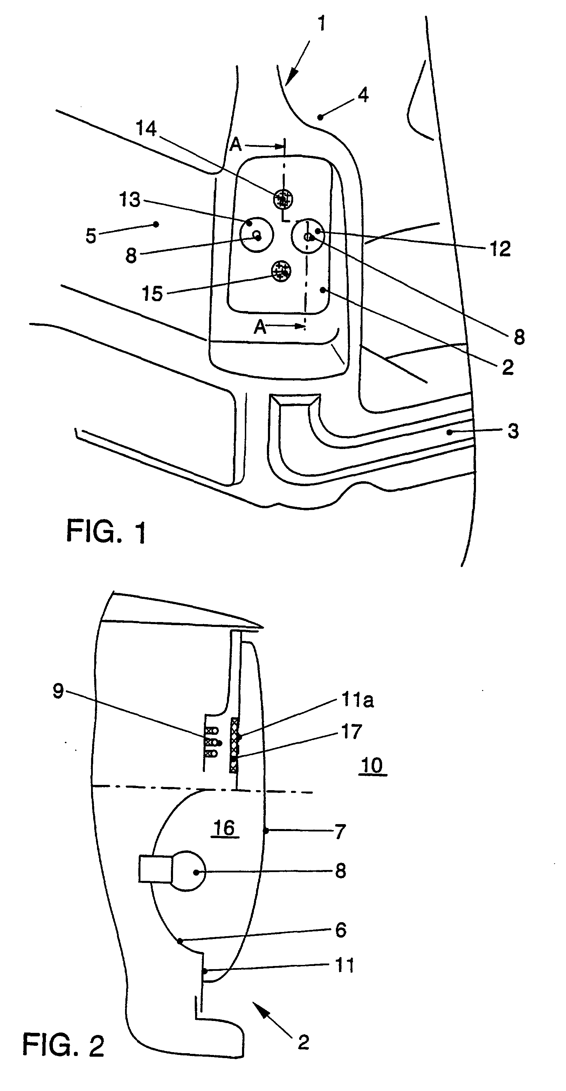

In Figur 1 ist ein Scheinwerfer oder eine Leuchte nachfolgend nur noch Leuchte 2 genannt, angeordnet in einem Kraftfahrzeug 1 zu erkennen. Die Leuchte 2 ist begrenzt durch die Kofferraumklappe 4, den Stoßfänger 3 und den Kotflügel 5. Die Leuchte 2 weist die Funktionsflächen 12, 13, 14 und 15 auf. Die Funktionsflächen 12, 13, 14 und 15 können z. B. Schlußlicht, Bremslicht, Rückfahrscheinwerfer oder auch Fahrtrichtungsanzeiger sein. Denkbar wären jedoch auch die Funktionen Abblendlicht, Fernlicht, Nebelscheinwerfer oder dgl.

In Figur 2 ist ein Querschnitt durch die Leuchte 2 zu erkennen. Der Querschnitt zeigt die Darstellung der Leuchte 2 entlang der Schnittlinie A-A aus Figur 1. Die Leuchte 2 weist ein Gehäuse 11 mit einer Lichtaustrittsöffnung 16 und eine die Lichtaustrittsöffnung 16 abdeckende Lichtscheibe 7 auf. An das Gehäuse 11 ist einstückig der Reflektor 6 angeformt. In dem Reflektor 6 ist die Lichtquelle 8 befestigt. Das von der Lichtquelle 8 abgestrahlte Licht wird von dem Reflektor 6 in Lichtabstrahlrichtung reflektiert. Es können jedoch als Lichtquellen auch Leuchtdioden verwendet werden, die ein sehr gerichtetes monochromatisches Licht aussenden. Die Ausbildung des Gehäuses 11 als Reflektor 6 kann damit entfallen. Das Gehäuse 11 hat dann lediglich den Zweck als Befestigungsansatz für die Leuchtdioden zu dienen. In dem Abschnitt 11a ist das Gehäuse 11 zumindest teiltransparent ausgebildet. Von der Lichtaustrittsseite 10 gesehen hinter dem Gehäuse 11 sind zusätzliche Lichtquellen 9 angeordnet. Die Lichtquellen 9 können an dem Gehäuse 11 oder an einem innenliegenden Fahrzeugteil befestigt werden. Das Gehäuse 11 kann in dem teiltransparenten Abschnitt 11a eine zusätzliche Lichtscheibe 17 aufweisen. Die Lichtscheibe 17 kann durch substraktive Farbmischung das von den zusätzlichen Lichtquellen 9 abgestrahlte Licht in die vorgegebene Farbe einfärben und/oder die Lichtverteilung der Lichtquelle 9 gezielt beeinflussen. Für einen Betrachter von der Lichtaustrittsseite 10 sind direkt lediglich die Lichtquellen 8 erkennbar. Es ergibt sich somit für ihn eine klar und einfach aufgebaute Leuchte 2. Ferner kann die Leuchte 2 bei gleichem Erscheinungsbild auch eine unterschiedliche Bestückung mit zusätzlichen Lichtquellen 9 aufweisen, so daß die Leuchte 2 für spezielle Fahrzeuge wie Einsatzfahrzeuge oder Sonderausführungen angepaßt werden kann.
Der Reflektor 6 kann durch eine gezielte Formgebung das von ihm reflektierte Licht bereits derart reflektieren, daß eine vorgegebene Lichtverteilung erreichbar ist. Dadurch wird es ermöglicht, eine klare Lichtscheibe 7 über die gesamte Leuchte 2 zu verwenden. Sind für die zusätzlichen Lichtquellen 9 optische Mittel erforderlich, so können diese in dem teiltransparenten Abschnitt 11a vorgesehen werden. Die teiltransparenten Abschnitte 11a können beispielsweise durch eine metallische Beschichtung erreicht werden. Solche metallische Beschichtungen von Lichtscheiben sind bereits aus dem deutschen Gebrauchsmuster DE-GM 296 04 910 U1 bekannt. Das Gehäuse 11 kann beispielsweise aus einem lichtdurchlässigen Kunststoff bestehen, der beim Spritzvorgang hinter eine metallisch beschichtete Kunststoffolie oder eine mit Kunststoff beschichtete Metallfolie hinterspritzt wird. Dadurch erhält man ein einseitig lichtdurchlässiges Bauteil. Weiterhin kann das Gehäuse 11 gezielt in dem Abschnitt 11 a durch Zusätze von wässrigen Farbsystemen oder gezielte Wahl der Dicke der Beschichtung in seiner Lichtdurchlässigkeit und/oder Farbgebung beeinflußt werden. Das Gehäuse 11 hat somit die Funktion, das von der Lichtquelle 8 abgestrahlte Licht zu reflektieren sowie das von den zusätzlichen Lichtquellen 9 abgestrahlte Licht in Form einer herkömmlichen Lichtscheibe zu beeinflussen oder auch nur als Befestigungsansatz für die Lichtquellen 8 oder 9 zu dienen. Denkbar wäre auch als Lichtquellen 8 und 9 lediglich Leuchtdioden zu verwenden, so daß eine gesonderte Lichtabgabeoptik oder Reflektoren nicht mehr erforderlich sind.

## Patentansprüche

1. Leuchte oder Scheinwerfer, insbesondere für ein Kraftfahrzeug, mit einem Gehäuse (11) mit einer Lichtausthttsöffnung (16), welche mit einer Lichtscheibe (7) abgedeckt ist, wobei das Gehäuse (11) zumindest einen Abschnitt (11a) äufweist, und wenigstens einer, zwischen Gehäuse (11) und Sichtscheibe (7) angeordneten Lichtquelle (8), wobei auf der der Lichtaustrittsseite (10) abgewandten Seite hinter dem Abschnitt (11a) des Gehäuses (11) wenigstens eine zusätzliche Lichtquelle (9) vorgesehen ist, **dadurch gekennzeichnet, daß** der Abschnitt (11a) des Gehäuses (11) teiltransparent ausgebildet ist, So daß für einen Betrachter der Leuchte oder des Scheinwerfers von außen nur die zwischen Gehäuse (11) und Lichtscheibe (7) angeordnete Lichtquelle (8) erkennbar ist.

2. Leuchte oder Scheinwerfer nach Anspruch 1, **dadurch gekennzeichnet, daß** dem teiltransparenten Abschnitt (11a) eine zusätzliche Lichtscheibe (17) zugeordnet ist.

3. Leuchte oder Scheinwerfer nach Anspruch 2, **dadurch gekennzeichnet, daß** mit der zusätzlichen Lichtscheibe (17) die Farbe und/oder die Verteilung des von der zusätzlichen Lichtquelle (9) abgestrahlten Lichtes veränderbar ist.

4. Leuchte oder Scheinwerfer nach einem der vorangegangenen Ansprüche, **dadurch gekennzeichnet, daß** die zusätzliche Lichtquelle (9) eine Lichtdiode ist.

5. Leuchte oder Scheinwerfer nach einem der vorangegangenen Ansprüche, **dadurch gekennzeichnet, daß** zumindest ein Teil des Gehäuses (11) als Reflektor (6) ausgebildet ist und das von der Lichtquelle (8) abgestrahlte Licht an dem Reflektor (6) derart reflektierbar ist, daß eine vorgegebene Lichtverteilung erreichbar ist.

6. Leuchte oder Scheinwerfer nach einem der vorangegangenen Ansprüche, **dadurch gekennzeichnet, daß** die Lichtscheibe (7) klar ausgebildet ist.

7. Leuchte oder Scheinwerfer nach einem der vorangegangenen Ansprüche, **dadurch gekennzeichnet, daß** der teiltransparente Abschnitt (11a) durch eine metallische Beschichtung gebildet ist.

8. Leuchte oder Scheinwerfer nach Anspruch 7, **dadurch gekennzeichnet, daß** die metallische Beschichtung eine metallisch beschichtete Kunststoffolie oder eine kunststoffbeschichtete Metallfolie ist.

9. Leuchte oder Scheinwerfer nach Anspruch 8, **dadurch gekennzeichnet, daß** der teiltransparente Abschnitt (11a) durch Hinterspritzen der metallisch beschichteten Kunststoffolie oder der kunststoffbeschichteten Metallfolie mit einem Kunststoff herstellbar ist.

## Claims

1. Lamp or headlight, in particular for a motor vehicle, having a housing (11) with a light outlet opening (16) which is covered by a light cap (7), the housing (11) having at least one section (11a), and having at least one light source (8) which is arranged between the housing (11) and light cap (7), at least one additional light source (9) being provided behind the section (11a) of the housing (11) on the side facing away from the light exit side (10), **characterized in that** the section (11a) of the housing (11) is designed to be partially transparent, so that only the light source (8) arranged between the housing (11) and light cap (7) can be seen by a person looking at the lamp or the headlight from the outside.

2. Lamp or headlight according to Claim 1, **characterized in that** the partially transparent section (11a) is assigned an additional light cap (17).

3. Lamp or headlight according to Claim 2, **characterized in that** the colour and/or the distribution of the light emitted by the additional light source (9) can be changed by the additional light cap (17).

4. Lamp or headlight according to one of the preceding claims, **characterized in that** the additional light source (9) is a light-emitting diode.

5. Lamp or headlight according to one of the preceding claims, **characterized in that** at least part of the housing (11) is designed as a reflector (6) and the light emitted by the light source (8) can be reflected at the reflector (6) in such a manner that a predetermined distribution of light can be achieved.

6. Lamp or headlight according to one of the preceding claims, **characterized in that** the light cap (7) is of clear design.

7. Lamp or headlight according to one of the preceding claims, **characterized in that** the partially transparent section (11a) is formed by a metallic coating.

8. Lamp or headlight according to Claim 7, **characterized in that** the metallic coating is a metallically coated plastic film or a plastic-coated metal foil.

9. Lamp or headlight according to Claim 8, **characterized in that** the partially transparent section (11a) can be produced by injecting a plastic behind the metallically coated plastic film or the plastic-coated metal foil.

## Revendications

1. Feu ou phare, notamment pour un véhicule automobile, comprenant un boîtier (11) avec une ouverture de sortie de la lumière (16) qui est recouverte par un verre frontal (7), le boîtier (11) présentant au moins une portion (11a), et au moins une source de lumière (8) disposée entre le boîtier (11) et le verre frontal (7), du côté opposé au côté de sortie de la lumière (10), derrière la portion (11a) du boîtier (11), au moins une source de lumière supplémentaire (9) étant prévue, **caractérisé en ce que** la portion (11a) du boîtier (11) est réalisée de manière partiellement transparente, de sorte que pour un observateur du feu ou du phare depuis l'extérieur, seulement la source de lumière (8) disposée entre le boîtier (11) et le verre frontal (7) est visible.

2. Feu ou phare selon la revendication 1, **caractérisé en ce que** l'on associe à la portion partiellement transparente (11a) un verre frontal supplémentaire (17).

3. Feu ou phare selon la revendication 2, **caractérisé en ce que** l'on peut modifier la couleur et/ou la distribution de la lumière émise par la source de lumière supplémentaire (9) avec le verre frontal supplémentaire (17).

4. Feu ou phare selon l'une quelconque des revendications précédentes, **caractérisé en ce que** la source de lumière supplémentaire (9) est une diode lumineuse.

5. Feu ou phare selon l'une quelconque des revendications précédentes, **caractérisé en ce qu'**au moins une partie du boîtier (11) est réalisée en tant que réflecteur (6) et la lumière émise par la source de lumière (8) peut être réfléchie de telle sorte sur le réflecteur (6), que l'on puisse obtenir une distribution de la lumière prédéfinie.

6. Feu ou phare selon l'une quelconque des revendications précédentes, **caractérisé en ce que** le verre frontal (7) est translucide.

7. Feu ou phare selon l'une quelconque des revendications précédentes, **caractérisé en ce que** la portion partiellement transparente (11a) est formée par un revêtement métallique.

8. Feu ou phare selon la revendication 7, **caractérisé en ce que** le revêtement métallique est une feuille de plastique revêtue de métal ou une feuille métallique revêtue de plastique.

9. Feu ou phare selon la revendication 8, **caractérisé en ce que** la portion partiellement transparente (11a) peut être fabriquée par revêtement par injection de la feuille de plastique revêtue de métal ou de la feuille métallique revêtue de plastique avec une matière plastique.
